# EUROPÄISCHE PATENTSCHRIFT

(11) **EP 3 096 422 B1**
(45) Veröffentlichungstag und Bekanntmachung des Hinweises auf die Patenterteilung: **24.07.2019**
(21) Anmeldenummer: 16170091.9
(22) Anmeldetag: 18.05.2016
(51) Int. Cl.: H02B 1/30, H02B 1/01

(54) **SCHALTSCHRANK MIT EINEM SOCKEL**
CONTROL CABINET WITH A BASE
ARMOIRE ELECTRIQUE DOTEE D'UN SOCLE

(30) Priorität: 22.05.2015 DE 102015108198
(43) Veröffentlichungstag der Anmeldung: 23.11.2016
(73) Patentinhaber: ABB AG, 68309 Mannheim (DE)
(72) Erfinder: Roth, Michael, 77880 Sasbach (DE); Diesing, Frank, 76547 Sinsheim (DE)

(56) Entgegenhaltungen:
- EP-A2- 2 242 155
- DE-U1- 8 432 766
- US-B2- 8 217 263

## Beschreibung

Die Erfindung geht aus von_einem Schaltschrank gemäß dem Oberbegriff von Anspruch 1.

Schaltschränke nehmen innerhalb eines Schaltschrankgehäuses Einrichtungen auf und werden üblicherweise innerhalb von Gebäuden aufgestellt. Das Schaltschrankgehäuse weist häufig einen Sockel auf, um dieses problemlos auf einem Untergrund aufstellen zu können. Der Sockel ist üblicherweise konstruktiv auf das jeweilige Schaltschrankgehäuse abgestimmt. Insbesondere ist die Art der Befestigung des Sockels auf das jeweilige Schaltschrankgehäuse abgestimmt. Ein solcher Sockel sollte leicht am Schaltschrankgehäuse montierbar sein. Dies ist insbesondere bei zerlegbaren Schaltschrankgehäusen nicht immer problemlos möglich.

Aus der EP 2 242 155 A2 ist ein Schaltschrank bekannt, dessen Rückwand Verbindungseinrichtungen aufweist, welche von der Rückwand pfostenartig abragen. Die pfostenartigen Verbindungseinrichtungen weisen Löcher auf, welche einem Bodenblech oder einer Plattform zugewandt sind, um dieses bzw. diese mit den Verbindungseinrichtungen zu verbinden.

Aus der DE 84 32 766 U1 ist ein Schaltschrankgehäuse bekannt, an welchem ein Sockel anordenbar ist. In einem Bodenbereich des Schaltschrankgehäuses ist eine vormontierte Verbindungseinrichtung angeordnet, an welcher der Sockel befestigbar ist. Die Verbindungseinrichtung ist als stabförmige Montageleiste ausgebildet, die innen in einem Schaltschrankgehäuse, nämlich in Eckbereichen, angeordnet ist.

Die US 8,217,263 B2 zeigt Schaltschrankgehäusewände mit Abkantungen, wobei die Abkantungen in Schlitze von Befestigungsteilen geschoben sind. Die Befestigungsteile sind inneren Eckbereichen des Schaltschrankgehäuses zugeordnet und von außen zugänglich. Von außen sind Außeneckteile auf die Befestigungsteile aufsetzbar. Die Außeneckteile werden jedoch durch von innen eingeführte Schrauben mit den inneren Befestigungsteilen verschraubt.

Bei einigen bekannten Sockeln ist nachteilig, dass deren Befestigung nur von innen durch einen Boden, insbesondere ein Bodenblech, eines Schaltschrankgehäuses möglich ist. Auch ist es schwierig, an ausgebauten Schaltschränken einen Sockel anzuordnen. Dies hängt damit zusammen, dass Einzelteile eines zerlegbaren Schaltschranks nur bedingt geeignet sind, um mit einem Sockel verbunden zu werden.

Vor diesem Hintergrund besteht ein Bedarf nach einem zerlegbaren Schaltschrank, der mit einem Sockel ausrüstbar ist, um auf einem Untergrund aufgestellt zu werden. Hierfür sollte ein bereits bestehender Sockel verwendet werden können, der am Schaltschrankgehäuse leicht montierbar ist.

Der Erfindung liegt daher die Aufgabe zugrunde, einen Schaltschrank anzugeben, an den problemlos ein Sockel, insbesondere von außen, anbringbar ist.

Erfindungsgemäß wird die voranstehende Aufgabe durch einen Schaltschrank mit den Merkmalen des Patentanspruchs 1 gelöst.

Danach weist die Verbindungseinrichtung einen Befestigungskörper auf, welcher einem zweiten Ende der Verbindungseinrichtung zugeordnet ist, wobei der Befestigungskörper an zwei orthogonal zueinander orientierten Anlageseiten mit dem inneren Gehäuseeckverbinder verbunden ist und an zwei weiteren orthogonal zueinander orientierten Anlageseiten mit einem äußeren Gehäuseeckverbinder verbunden ist, wobei der äußere Gehäuseeckverbinder Durchgänge aufweist, in die Schrauben zum Verschrauben des Sockels oder von Teilen des Sockels mit dem Befestigungskörper eingreifen

Erfindungsgemäß ist erkannt worden, dass ein Sockel von außen leicht an ein Schaltschrankgehäuse montierbar ist, wenn hierfür eine vormontierte Verbindungseinrichtung vorgesehen ist. Der Sockel oder Teile zum Aufbauen eines Sockels können leicht an die Verbindungseinrichtung von außen angeflanscht werden. Es ist erfindungsgemäß nicht notwendig, im Innenraum des zerlegbaren Schaltschranks zu arbeiten, um den Sockel oder Teile von diesem am Schaltschrankgehäuse zu befestigen. Zumindest teilweise innerhalb des Schaltschrankgehäuses liegende Bauteile der Verbindungseinrichtung werden bereits während der Schaltschrankmontage befestigt und sind so vormontiert, dass leicht von außen weitere Bauteile angebracht werden können, die für den Aufbau eines Sockels notwendig sind.

Die Verbindungseinrichtung weist dazu_einen inneren Gehäuseeckverbinder auf, der sich längs einer Kante oder Seite des Schaltschrankgehäuses erstreckt. Hierdurch werden ein Boden und eine Seitenwand des Schaltschrankgehäuses stabilisiert. Überdies wird die Kante vor eindringendem Schmutz geschützt.

_Die Verbindungseinrichtung weist erfindungsgemäß einen Befestigungskörper auf, welcher einem zweiten Ende der Verbindungseinrichtung zugeordnet ist. So kann ein weiteres Bauteil mit diesem Ende der Verbindungseinrichtung verbunden, nämlich insbesondere mit dem Befestigungskörper verschraubt, werden. Bevorzugt weist der Befestigungskörper daher Gewinde zur Aufnahme von Schrauben, insbesondere des Typs M8, auf.

Weiter ist erfindungsgemäß der Befestigungskörper an zwei orthogonal zueinander orientierten Anlageseiten mit dem inneren Gehäuseeckverbinder verbunden und an zwei weiteren orthogonal zueinander orientierten Anlageseiten mit einem äußeren Gehäuseeckverbinder verbunden, wobei der äußere Gehäuseeckverbinder Durchgänge aufweist, in die Schrauben zum Verschrauben des Sockels oder von Teilen des Sockels mit dem Befestigungskörper eingreifen. Die Verbindung erfolgt bevorzugt durch Verschrauben. Der Befestigungskörper ist bevorzugt würfelartig ausgebildet und stabilisiert und fixiert Einzelteile des Schaltschrankgehäuses, insbesondere Oberteile, Unterteile, Seitenteile und die inneren und/oder äußeren Gehäuseeckverbinder

Weiter vorteilhaft weist die Verbindungseinrichtung einen Befestigungswinkel auf, welcher einem ersten Ende der Verbindungseinrichtung zugeordnet ist. Hierdurch kann die Verbindungseinrichtung an einem Ende mit einem weiteren Bauteil verschraubt werden, wenn nämlich der Befestigungswinkel mit einem Gewinde versehen ist.

Bevorzugt weist der Befestigungswinkel daher Gewinde zur Aufnahme von Schrauben, insbesondere des Typs M8, auf.

Weiter vorteilhaft ist der Befestigungswinkel im inneren Gehäuseeckverbinder aufgenommen. So kann der innere Gehäuseeckverbinder mit einem weiteren Bauteil verschraubt werden, wenn nämlich der Befestigungswinkel mit einem Gewinde versehen ist. Der Befestigungswinkel stabilisiert vorteilhaft ein Ende des inneren Gehäuseeckverbinders, wenn der Befestigungswinkel in den inneren Gehäuseeckverbinder eingelegt ist. Das Einlegen des Befestigungswinkels erfolgt vorzugsweise von Hand. Nach dem Einlegen des Befestigungswinkels kann der innere Gehäuseeckverbinder in vier Eckbereiche der Gehäuserückwand des Schaltschrankgehäuses eingerastet werden.

Vorteilhaft werden je zwei gewinkelt zueinander angeordnete Verbindungsstellen ausgebildet. Durch das Vorsehen eines äußeren Gehäuseeckverbinders wird eine Außenkante gebildet. Des Weiteren kann der äußere Gehäuseeckverbinder ein Widerlager für Teile des Sockels, insbesondere für Füße, bilden. Der äußere Gehäuseeckverbinder schützt ebenfalls die Kante, insbesondere vor eindringendem Schmutz. Insoweit wird durch den inneren und äußeren Gehäuseeckverbinder ein Kantenschutzsystem geschaffen.

Bevorzugt ist der Befestigungskörper zwischen dem inneren Gehäuseeckverbinder und dem äußeren Gehäuseeckverbinder aufgenommen. Der Befestigungskörper ist bevorzugt einerseits mit dem inneren Gehäuseeckverbinder verschraubt und zugleich mit dem äußeren Gehäuseeckverbinder verschraubt.

Weiter vorteilhaft ist der äußere Gehäuseeckverbinder mit dem Befestigungswinkel verbunden, nämlich bevorzugt verschraubt. So ist der äußere Gehäuseeckverbinder auch an einem zweiten Ende festgelegt und dabei vorzugsweise verschraubt.

Vorteilhaft umfasst der Sockel vier Teile, nämlich vier Füße, wobei je zwei Füße mit der Verbindungseinrichtung mittelbar oder unmittelbar verbunden sind. Die Füße beabstanden den Boden des Schaltschrankgehäuses von einem Untergrund. Der Boden umfasst bevorzugt ein Bodenblech.

Weiter vorteilhaft ist ein Fuß als gewinkeltes Teil ausgebildet, welches vier zueinander orthogonale Anlageflächen aufweist. Die Anlageflächen sind bevorzugt mit Durchgängen versehen, so dass jeder Fuß mit vier Gegenflächen verschraubt werden kann. Bevorzugt ist ein Fuß aus Blech ausgebildet.

Vorteilhaft sind Ringschrauben zum Transportieren des Schaltschranks vorgesehen, welche mit der Verbindungseinrichtung oder einer weiteren Verbindungseinrichtung mittelbar oder unmittelbar verbunden sind. Hierdurch kann der Schaltschrank durch einen Lastentransporter leicht ergriffen werden. Die Ringschrauben können mit Verbindungseinrichtungen verbunden werden, die an einer Oberseite des Schaltschranks angeordnet sind.

Bevorzugt sind im äußeren Gehäuseeckverbinder Durchgänge ausgebildet. In diese Durchgänge können Schrauben zum Verschrauben der Füße mit dem Befestigungswinkel und dem Befestigungskörper eingreifen. Des Weiteren können die erwähnten Ringschrauben zum Transportieren des Schaltschranks die Durchgänge durchgreifen und mit der Verbindungseinrichtung, nämlich insbesondere mit dem Befestigungswinkel und dem Befestigungskörper, verschraubt sein.

Je zwei äußere Gehäuseeckverbinder können einander gegenüberliegend an der Oberseite und/ oder am Boden des Schaltschranks angeordnet sein. Bevorzugt sind daher an vier Kanten des Schaltschranks jeweils Verbindungseinrichtungen der hier beschriebenen Art vorgesehen.

Einzelteile des zerlegbaren Schaltschrankgehäuses, insbesondere Einzelteile, die sich im Bodenbereich befinden, sind derart ausgebildet, dass sie mit dem Sockel oder Teilen des Sockels verbindbar, nämlich insbesondere verschraubbar, sind.

In der Zeichnung zeigen
- Fig. 1: einen Ausschnitt eines Schaltschrankgehäuses, an welchem ein Sockel anordenbar ist, wobei diverse Bauteile im nicht montierten Zustand gezeigt sind, welche zum Aufbau des Sockels notwendig sind,
- Fig. 2: zwei perspektivische Ansichten eines inneren Gehäuseeckverbinders, wobei die obere Ansicht zeigt, dass an einem Ende des inneren Gehäuseeckverbinders ein Befestigungswinkel eingelegt ist, und wobei die untere Ansicht den Befestigungswinkel getrennt von dem inneren Gehäuseeckverbinder zeigt,
- Fig. 3: einen weiteren Ausschnitt des Schaltschrankgehäuses gemäß Fig. 1, wobei ein würfelartiger Befestigungskörper gezeigt ist, welcher durch Schrauben bereits an montierte Einzelteile des Schaltschrankgehäuses angeschraubt ist,
- Fig. 4: einen montierten Sockel, wobei zwei von vier Füßen dargestellt sind, und
- Fig. 5: eine Anordnung von Ringschrauben, die anstelle der Füße gemäß Fig. 4 oder an einer weiteren Verbindungseinrichtung mit dem Schaltschrank zu Transportzwecken verbunden sind.

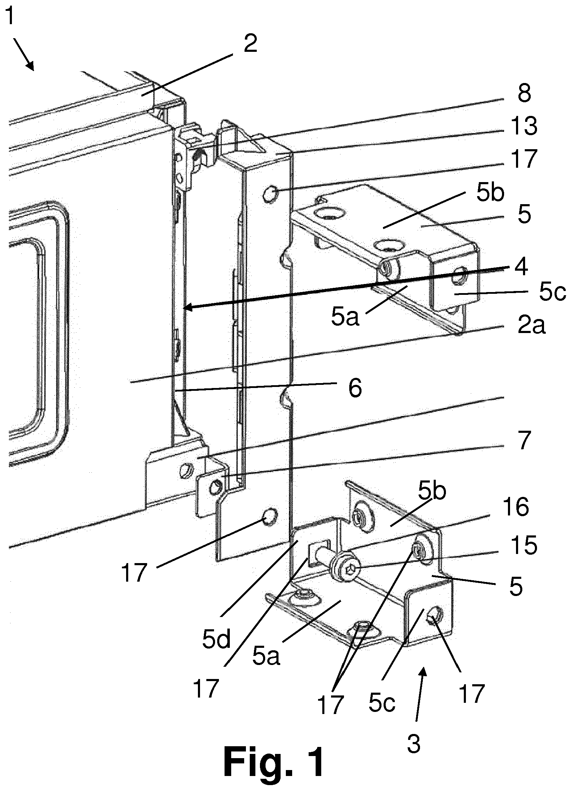

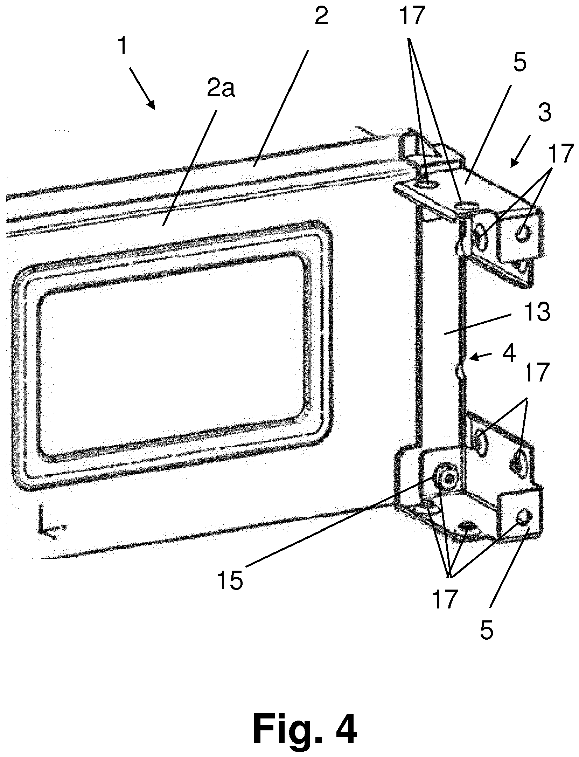

Fig. 1 und 4 zeigen einen zerlegbaren Schaltschrank 1, umfassend ein Schaltschrankgehäuse 2, an welchem ein Sockel 3 zum Aufstellen des Schaltschranks 1 angeordnet ist.

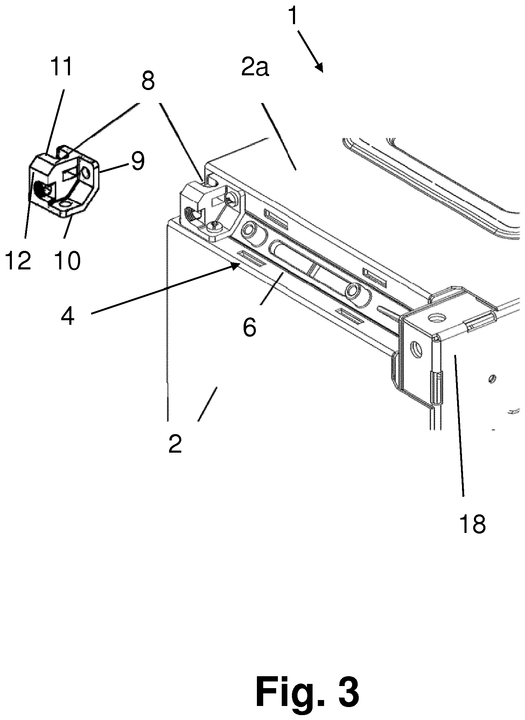

Fig. 1 und 3 zeigen, dass in einem Boden 2a des Schaltschrankgehäuses 2 mindestens eine vormontierte Verbindungseinrichtung 4 angeordnet ist, an welcher Teile 5 des Sockels 3 befestigbar sind.

Die Verbindungseinrichtung 4 weist einen inneren Gehäuseeckverbinder 6 auf, der sich längs einer Kante oder Seite des Schaltschrankgehäuses 2 erstreckt.

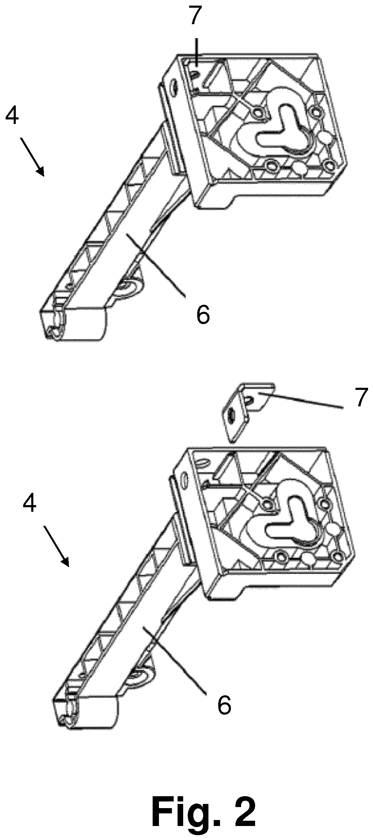

Fig. 2 zeigt, dass die Verbindungseinrichtung 4 einen Befestigungswinkel 7 aufweist, welcher einem ersten Ende der Verbindungseinrichtung 4 zugeordnet ist. Fig. 2 zeigt konkret, dass der Befestigungswinkel 7 im inneren Gehäuseeckverbinder 6 aufgenommen ist. Der innere Gehäuseeckverbinder 6 weist hierzu an einem Ende ein einseitig offenes Gehäuse auf, in welches der Befestigungswinkel 7 händisch einlegbar ist. Der innere Gehäuseeckverbinder 6 kann nach Einlegen des Befestigungswinkels 7 mit einer Gehäuserückwand 18 verrastet werden. Der Befestigungswinkel 7 weist zwei Gewinde für die Aufnahme von Schrauben 15 des Typs M8 auf.

Fig. 1 und Fig. 3 zeigen, dass die Verbindungseinrichtung 4 auch einen würfelartigen oder klotzartigen Befestigungskörper 8 aufweist, welcher einem zweiten Ende der Verbindungseinrichtung 4 zugeordnet ist. Der Befestigungskörper 8 ist für die Aufnahme von Schrauben 15 des Typs M8 geeignet.

Fig. 3 zeigt, dass der Befestigungskörper 8 an zwei orthogonal zueinander orientierten Anlageseiten 9, 10 mit dem inneren Gehäuseeckverbinder 6 und mit Einzelteilen des Schaltschrankgehäuses 2 verbunden ist. An zwei weiteren orthogonal zueinander orientierten Anlageseiten 11, 12 ist der Befestigungskörper 8 mit dem äußeren Gehäuseeckverbinder 13 verbindbar.

In Fig. 4 ist eine Montagesituation dargestellt, bei welcher der äußere Gehäuseeckverbinder 13 mittelbar mit dem hier nicht gezeigten Befestigungswinkel 7 verbunden ist. Die Verbindung erfolgt über Schrauben 15 des Typs M8, welche in den Befestigungswinkel 7 eingreifen.

Fig. 1 und Fig. 4 zeigen, dass der Sockel 3 vier Teile 5, nämlich vier Füße, umfasst, wobei je zwei Füße mit einer Verbindungseinrichtung 4 verbunden sind. Zwar ist in Fig. 1 und Fig. 4 nur eine Verbindungseinrichtung 4 gezeigt, jedoch ist dieser gegenüberliegend eine nicht gezeigte weitere Verbindungseinrichtung 4 angeordnet.

Ein Fuß ist als gewinkeltes Teil 5 ausgebildet, welches vier zueinander orthogonale Anlageflächen 5a-5d aufweist. Zur Befestigung der Teile 5 am äußeren Gehäuseeckverbinder 13 sind in diesem Durchgänge 17 ausgebildet. Die Durchgänge 17 können von Schrauben 15 des Typs M8 durchgriffen werden. Zwischen den Schrauben 15 und dem äußeren Gehäuseeckverbinder 13 sind Unterlegscheiben 16 angeordnet. Dies ist in Fig. 1 dargestellt.

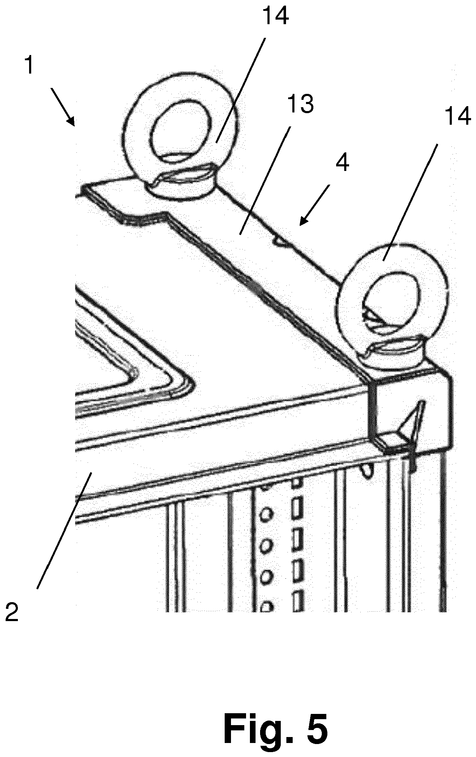

Fig. 5 zeigt, dass Ringschrauben 14 zum Transportieren des Schaltschranks 1 vorgesehen sind, welche mit einer Verbindungseinrichtung 4 verbunden sind. So kann der Schaltschrank 1 durch einen Kran transportiert werden. Die Ringschrauben 14 weisen ebenfalls ein Gewinde des Typs M8 auf, durchgreifen die Durchgänge 17 eines äußeren Gehäuseeckverbinders 13 und sind jeweils mit einem Befestigungswinkel 7 und einem Befestigungskörper 8 verschraubt.

Hierbei ist von Bedeutung, dass die Ringschrauben 14 an einer Oberseite des Schaltschranks 1 angeordnet sein können, wenn nämlich nicht nur am Boden 2a, sondern auch an der Oberseite Verbindungseinrichtungen 4 der hier beschriebenen Art vorgesehen sind.

### Bezugszeichenliste

- 1: Schaltschrank
- 2: Schaltschrankgehäuse
- 2a: Boden
- 3: Sockel
- 4: Verbindungseinrichtung
- 5: Teil
- 5a-5d: Anlagefläche
- 6: innerer Gehäuseeckverbinder
- 7: Befestigungswinkel
- 8: Befestigungskörper
- 9-12: Anlageseite
- 13: äußerer Gehäuseeckverbinder
- 14: Ringschraube
- 15: Schraube
- 16: Unterlegscheibe
- 17: Durchgang
- 18: Gehäuserückwand

## Patentansprüche

1. Schaltschrank (1), umfassend ein Schaltschrankgehäuse (2), an welchem von außen ein Sockel (3) zum Aufstellen des Schaltschranks (1) angeordnet ist, wobei in oder an einem Boden (2a) oder Bodenbereich des Schaltschrankgehäuses (2) mindestens eine vormontierte Verbindungseinrichtung (4) angeordnet ist, an welcher mittelbar oder unmittelbar der Sockel (3) oder Teile (5) des Sockels (3) befestigt ist bzw. sind, und wobei die Verbindungseinrichtung (4) einen inneren Gehäuseeckverbinder (6) aufweist, der sich längs einer Kante oder Seite des Schaltschrankgehäuses (2) erstreckt,
**dadurch gekennzeichnet, dass** die Verbindungseinrichtung (4) einen Befestigungskörper (8) aufweist, welcher einem zweiten Ende der Verbindungseinrichtung (4) zugeordnet ist, wobei der Befestigungskörper (8) an zwei orthogonal zueinander orientierten Anlageseiten (9, 10) mit dem inneren Gehäuseeckverbinder (6) verbunden ist und an zwei weiteren orthogonal zueinander orientierten Anlageseiten (11, 12) mit einem äußeren Gehäuseeckverbinder (13) verbunden ist, wobei der äußere Gehäuseeckverbinder (13) Durchgänge (17) aufweist, in die Schrauben (15) zum Verschrauben des Sockels (3) oder von Teilen (5) des Sockels (3) mit dem Befestigungskörper (8) eingreifen.

2. Schaltschrank nach Anspruch 1, **dadurch gekennzeichnet, dass** die Verbindungseinrichtung (4) einen Befestigungswinkel (7) aufweist, welcher einem ersten Ende der Verbindungseinrichtung (4) zugeordnet ist.

3. Schaltschrank nach Anspruch 2, **dadurch gekennzeichnet, dass** der Befestigungswinkel (7) im inneren Gehäuseeckverbinder (6) aufgenommen ist.

4. Schaltschrank nach Anspruch 2 oder 3, **dadurch gekennzeichnet, dass** der äußere Gehäuseeckverbinder (13) mit dem Befestigungswinkel (7) verbunden ist.

5. Schaltschrank nach einem der voranstehenden Ansprüche, **dadurch gekennzeichnet, dass** der Sockel (3) vier Teile (5), nämlich vier Füße, umfasst, wobei je zwei Füße mit der Verbindungseinrichtung (4) mittelbar oder unmittelbar verbunden sind.

6. Schaltschrank nach Anspruch 5, **dadurch gekennzeichnet, dass** ein Fuß als gewinkeltes Teil (5) ausgebildet ist, welches vier zueinander orthogonale Anlageflächen (5a-5d) aufweist.

7. Schaltschrank nach einem der voranstehenden Ansprüche, **dadurch gekennzeichnet, dass** Ringschrauben (14) zum Transportieren des Schaltschranks (1) vorgesehen sind, welche mit der Verbindungseinrichtung (4) oder einer weiteren Verbindungseinrichtung (4) mittelbar oder unmittelbar verbunden sind.

## Claims

1. Switchgear cabinet (1) comprising a switchgear cabinet housing (2) on which a base (3) for installing the switchgear cabinet (1) is arranged from the outside, wherein at least one premounted connecting device (4) is arranged in or on a bottom (2a) or bottom region of the switchgear cabinet housing (2), the base (3) or parts (5) of the base (3) being indirectly or directly fastened to the said connecting device, and wherein the connecting device (4) has an inner housing corner connector (6) which extends along an edge or side of the switchgear cabinet housing (2),
**characterized in that** the connecting device (4) has a fastening body (8) which is associated with a second end of the connecting device (4), wherein the fastening body (8), on two abutment sides (9, 10) which are oriented orthogonally in relation to one another, is connected to the inner housing corner connector (6) and, on two further abutment sides (11, 12) which are oriented orthogonally in relation to one another, is connected to an outer housing corner connector (13), wherein the outer housing corner connector (13) has passages (17) into which screws (15) engage for the purpose of screwing the base (3) or parts (5) of the base (3) to the fastening body (8).

2. Switchgear cabinet according to Claim 1, **characterized in that** the connecting device (4) has a fastening bracket (7) which is associated with a first end of the connecting device (4).

3. Switchgear cabinet according to Claim 2, **characterized in that** the fastening bracket (7) is accommodated in the inner housing corner connector (6).

4. Switchgear cabinet according to Claim 2 or 3, **characterized in that** the outer housing corner connector (13) is connected to the fastening bracket (7).

5. Switchgear cabinet according to one of the preceding claims, **characterized in that** the base (3) comprises four parts (5), specifically four feet, wherein in each case two feet are indirectly or directly connected to the connecting device (4).

6. Switchgear cabinet according to Claim 5, **characterized in that** a foot is designed as an angled part (5) which has four abutment faces (5a-5d) which are orthogonal in relation to one another.

7. Switchgear cabinet according to one of the preceding claims, **characterized in that** eyebolts (14) are provided for transporting the switchgear cabinet (1), which eyebolts are indirectly or directly connected to the connecting device (4) or a further connecting device (4).

## Revendications

1. Armoire électrique (1), comprenant un boîtier d'armoire électrique (2) au niveau duquel est disposé, depuis l'extérieur, un socle (3) pour poser l'armoire électrique (1), au moins un dispositif de liaison prémonté (4) étant disposé dans ou sur un fond (2a) ou une région de fond du boîtier d'armoire électrique (2), au niveau duquel le socle (3) ou des parties (5) du socle (3) est ou sont fixé(es) de manière directe ou indirecte, et le dispositif de liaison (4) présentant un raccord d'angle de boîtier interne (6) qui s'étend le long d'une arête ou d'un côté du boîtier d'armoire électrique (2),
**caractérisée en ce que** le dispositif de liaison (4) présente un corps de fixation (8) qui est associé à une deuxième extrémité du dispositif de liaison (4), le corps de fixation (8) étant connecté, au niveau de deux côtés d'appui (9, 10) orientés perpendiculairement l'un à l'autre, au raccord d'angle de boîtier interne (6) et au niveau de deux autres côtés d'appui (11, 12) orientés perpendiculairement l'un à l'autre, à un raccord d'angle de boîtier externe (13), le raccord d'angle de boîtier externe (13) présentant des passages (17) dans lesquels s'engagent des vis (15) pour le vissage du socle (3) ou de parties (5) du socle (3) au corps de fixation (8).

2. Armoire électrique selon la revendication 1, **caractérisée en ce que** le dispositif de liaison (4) présente un coude de fixation (7) qui est associé à une première extrémité du dispositif de liaison (4).

3. Armoire électrique selon la revendication 2, **caractérisée en ce que** le coude de fixation (7) est reçu dans le raccord d'angle de boîtier interne (6).

4. Armoire électrique selon la revendication 2 ou 3, **caractérisée en ce que** le raccord d'angle de boîtier externe (13) est connecté au coude de fixation (7).

5. Armoire électrique selon l'une quelconque des revendications précédentes, **caractérisée en ce que** le socle (3) comprend quatre parties (5), à savoir quatre pieds, deux pieds étant à chaque fois connectés de manière directe ou indirecte au dispositif de liaison (4).

6. Armoire électrique selon la revendication 5, **caractérisée en ce qu'**un pied est réalisé sous forme de partie coudée (5) qui présente quatre surfaces d'appui perpendiculaires les unes aux autres (5a-5d) .

7. Armoire électrique selon l'une quelconque des revendications précédentes, **caractérisée en ce que** des vis à oeillet (14) pour le transport de l'armoire électrique (1) sont prévues, lesquelles sont connectées directement ou indirectement au dispositif de liaison (4) ou à un autre dispositif de liaison (4).
